# EUROPÄISCHE PATENTSCHRIFT

(11) **EP 3 614 536 B1**
(45) Veröffentlichungstag und Bekanntmachung des Hinweises auf die Patenterteilung: **06.01.2021**
(21) Anmeldenummer: 18189977.4
(22) Anmeldetag: 21.08.2018
(51) Int. Cl.: H02K 5/14, H02K 13/00, H02K 11/01

(54) **SCHLEIFRINGBRÜCKE, SCHLEIFRINGEINHEIT, ELEKTRISCHE MASCHINE UND WINDKRAFTANLAGE**
SLIP RING BRIDGE, SLIP RING UNIT, ELECTRIC MACHINE AND WIND TURBINE
PASSERELLE DE BAGUE COLLECTRICE, UNITÉ DE BAGUE COLLECTRICE, MACHINE ÉLECTRIQUE ET ÉOLIENNE

(43) Veröffentlichungstag der Anmeldung: 26.02.2020
(73) Patentinhaber: Flender GmbH, 46395 Bocholt (DE)
(72) Erfinder: Memminger, Oliver, 94127 Neuburg a. Inn (DE); Binder, Herbert, 94127 Neuburg (DE); Gruber, Robert, 94099 Ruhstorf (DE); Oberneder, Manuel, 94124 Büchlberg (DE); Schifferer, Klaus, 94127 Neuburg am Inn (DE); Vogel, Anatoli, 94032 Passau (DE); Zeichfüßl, Roland, 94099 Ruhstorf a. d. Rott (DE)
(74) Vertreter: Maier, Daniel Oliver

(56) Entgegenhaltungen:
- CN-B- 106 067 704
- CN-U- 202 856 512
- CN-Y- 201 178 359
- DE-A1- 10 003 900
- US-A- 3 905 664

## Beschreibung

Schleifringbrücke, Schleifringeinheit, elektrische Maschine und Windkraftanlage.

Dokumente DE10003900 A1, US3905664 A, CN201178359 Y offenbaren Schleifringbrücken, insbesondere zum Einsatz in einer Windkraftanlage, aufweisend zumindest zwei Segmente und zumindest ein Isolationselement, wobei das Isolationselement zur Isolation der Segmente und zur Beabstandung der Segmente ausgebildet ist.

Die Erfindung betrifft eine Schleifringbrücke und eine Schleifringeinheit. Darüber hinaus betrifft die Erfindung eine elektrische Maschine und eine Windkraftanlage. Schleifringeinheiten umfassen in der Regel eine Schleifringbrücke als stationäres Element und einen Schleifring als rotierbares Element. Eine Schleifringeinheit dient zur Übertragung elektrischer Leistung von einem stationären Element, z.B. von einem Stator einer elektrischen Maschine, zu einem rotierbaren Element, z.B. zu einem Rotor einer elektrischen Maschine. Hierbei kann die elektrische Leistung von Schleifringbürsten, die jeweils mit einem Segment der Schleifringbrücke verbunden sind, auf den drehbaren Schleifring übertragen werden.

Bei der Übertragung von hoher elektrischer Leistung und/oder hohen Spannungen treten zuweilen Probleme bei der elektrischen Isolierung auf. Insbesondere bei der Übertragung eines Mehrphasen-Wechselstroms bzw. einer Mehrphasen-Wechselspannung treten hohe Potentialdifferenzen zwischen den einzelnen stromführenden Segmenten auf. Die hohen Potentialdifferenzen führen gegebenenfalls zu unkontrollierten Entladungen oder zu unkontrollierbaren elektrischen Überschlägen.

Um die Isolation gegen solche unkontrollierte Entladungen oder gegen unkontrollierte elektrische Überschläge zu verbessern, werden Schleifringeinheiten, insbesondere Bürstenbrücken, in ihren Abmessungen vergrößert. Durch die Vergrößerung der Bürstenbrücke werden die Abstände zwischen den Segmenten größer und die Gefahr von einem unkontrollierten Ladungsaustausch wird geringer.

Insbesondere beim Einsatz in Windkraftanlagen sind große Abmessungen aufgrund des begrenzten Platzangebots in einer Gondel der Windkraftanlage jedoch nachteilhaft.

Daher ist es Aufgabe, einen unkontrollierten Ladungsausgleich bei der Übertragung von elektrischer Leistung zuverlässig zu verhindern, ohne die Abmessungen einer Schleifringeinheit, insbesondere der Bürstenbrücke, zu vergrößern.

Diese Aufgabe wird durch eine Bürstenbrücke gemäß Anspruch 1 gelöst. Weiter wird die Aufgabe mit Hilfe einer Schleifringeinheit gemäß Anspruch 11 gelöst. Darüber hinaus wird die Aufgabe durch eine elektrische Maschine gemäß Patentanspruch 12 und eine Windkraftanlage gemäß Patentanspruch 13 gelöst.

Die Erfindung gründet auf der Erkenntnis, dass zur Isolierung der einzelnen Segmente der Bürstenbrücke eine wirksame Isolation der Segmente untereinander notwendig ist. Zur Isolation der Segmente untereinander dienen hier sogenannte Isolationselemente. Die Isolationselemente dienen überdies zum Zusammenhalt der Segmente der Bürstenbrücke.

Eine Bürstenbrücke weist vorteilhaft mehrere Segmente auf, wobei die Segmente jeweils Öffnungen aufweisen. Die Öffnungen dienen vorzugsweise jeweils zur Durchführung des Isolationselements. Die Isolationselemente und die Segmente bilden vorzugsweise das Gerüst der Bürstenbrücke. Die Öffnungen sind vorzugsweise jeweils an derselben Stelle des Segments angeordnet. Mittels Abstandshalter kann der Abstand zwischen jeweils zwei Segmenten darüber hinaus konstant gehalten werden.

Das Isolationselement ist vorzugsweise zylinderförmig ausgebildet. Das Isolationselement weist vorteilhaft in seinem Inneren einen metallischen Bolzen auf, wobei der Bolzen zur Verbesserung der mechanischen Stabilität vorgesehen ist.

Der metallische Bolzen und die innere Mantelfläche der jeweiligen Öffnung des Segments bilden eine elektrische Kapazität aus.

Insbesondere bei Übertragung eines Wechselstroms kann die elektrische Kapazität zur Verminderung der Isolation zwischen den Segmenten führen.

Um die Kapazität zu vermindern, wird vorzugsweise zwischen dem Bolzen und der Mantelfläche der Öffnung eine Schirmung positioniert. Die Schirmung ist vorzugsweise als metallische Schicht zwischen der Mantelfläche des Bolzens und der Mantelfläche der Öffnung, die den Bolzen umfasst, ausgebildet. In der Regel ist die Schirmung sowohl gegenüber dem Bolzen als auch gegenüber dem stromführenden Segment isoliert.

Verbessert werden kann die Schirmung darüber hinaus durch eine Verbindung der Schirmung mit einem konstanten elektrischen Potential, beispielhaft durch eine Erdung. Durch die elektrische Verbindung kann die Schirmung Ladungen ableiten.

Problematisch bei der Isolierung der (meist aus Metall ausgeführten) Segmente können darüber hinaus Kriechströme an den Außenseiten des jeweiligen Isolationselements sein.

Insbesondere durch die Ablagerung von Staub an der Außenseite der Bürstenbrücke können sich zwischen den Segmenten Kriechströme ausbilden. Zur verbesserten Stabilität der Segmente zueinander können um die Isolationselemente und zwischen den Segmenten Abstandshalter angeordnet sein.

Demnach können unkontrollierte Ladungsübergänge zwischen den Segmenten weiter minimiert werden, indem die Oberfläche des jeweiligen Isolationselements oder des jeweiligen Abstandhalters vergrößert wird. Die Oberfläche kann durch Aufprägungen (konvexe Oberfläche) oder durch eine Einprägung (Konkave Oberfläche) vergrößert werden. Vorteilhaft dient eine gerippte Form zur Kriechwegverlängerung und damit zur Verbesserung der Isolation. Eine Kriechwegverlängerung kann durch Aufprägungen ausgebildet sein, die um die Mantelfläche des Abstandshalters herum verlaufen.

Die Schleifringbrücke dient insbesondere zum Einsatz in einer Windkraftanlage. Die Schleifringbrücke weist zumindest zwei Segmente und zumindest ein Isolationselement auf, wobei zumindest ein Teil der Segmente zur Bereitstellung einer elektrischen Leistung, insbesondere mit Hilfe von Schleifringbürsten ausgebildet ist, wobei das Isolationselement zur Isolation der Segmente und zur Beabstandung der Segmente ausgebildet ist, dadurch gekennzeichnet, dass das jeweilige Isolationselement eine Schirmung umfasst, und dass die Schirmung im Inneren des jeweiligen Isolationssegments angeordnet ist, und dass die Schirmung mit einem konstanten elektrischen Potential verbunden ist.

Die Segmente sind vorzugsweise aus Metall ausgebildet. Die Segmente weisen vorzugsweise eine Ringsegment-artige Struktur auf. Die Segmente weisen vorzugsweise Öffnungen auf, wobei die Öffnungen zur Durchführung der Isolationssegmente ausgebildet sind. Die Isolationselemente und die Segmente bilden vorzugsweise ein Gerüst der Bürstenbrücke.

Zur verbesserten Isolierung ist das jeweilige Isolationselement aus einem elektrischen Isolator, wie einem Kunststoff, einem Verbundwerkstoff oder einer Keramik, hergestellt. Das Isolationssegment ist vorzugsweise zylinderförmig ausgeführt. Das Isolationssegment umfasst im Inneren eine Schirmung, wobei die Schirmung ebenfalls zylindersymmetrisch ausgebildet ist.

Vorzugsweise weisen die Segmente an den jeweils gleichen Stellen Öffnungen auf, wobei die Öffnungen zur Durchführung des jeweiligen Isolationselementes dienen. Die Mantelfläche der jeweiligen Öffnung berührt vorzugsweise die Mantelfläche des Isolationselements.

Vorzugsweise sind die Schleifringbürsten jeweils mit dem Segment elektrisch verbunden.

Die Bereitstellung der elektrischen Leistung erfolgt vorzugsweise durch eine Mehrphasen-Wechselspannung, insbesondere einer Dreiphasen-Wechselspannung.

Die Schirmung ist vorzugsweise durch eine Metallfolie ausgebildet. Die Schirmung dient vorzugsweise zur Abschirmung des Bolzens, welcher vorzugsweise aus Metall ausgebildet ist. Der jeweilige Bolzen dient vorzugsweise in Verbindung mit Abstandshaltern zur Festigung der Struktur der Bürstenbrücke.

Die Segmente sind vorzugsweise im Wesentlichen parallel positioniert.

Insbesondere durch die Schirmung ist die Isolation der Segmente gegen unkontrollierte Ladungsübergänge verbessert.

Durch die verbesserte Isolation kann die hier beschriebene Bürstenbrücke besonders kompakt ausgebildet sein.

Durch die Erfindung können große elektrische Leistungen mit Hilfe einer kompakt ausgebildeten Bürstenbrücke mit einem Schleifring ausgetauscht werden.

Bei einer vorteilhaften Ausgestaltung der Erfindung ist das jeweilige Isolationselement mit dem jeweiligen Segment verbunden, wobei das jeweilige Isolationselement durch Öffnungen zumindest derjenigen Segmente geführt ist, welche mit einem elektrischen Potential beaufschlagt sind.

Die Öffnung umfasst hier vorteilhaft auch eine Aussparung an einer Seite des Segments, welches sich zur Aufnahme des Isolationselements eignet.

Vorzugsweise umfasst eine Bürstenbrücke stromführende Segmente, die zur Bereitstellung einer Mehrphasen-Wechselspannung ausgebildet sind, sowie geerdete Segmente, welche mit einem konstanten Potential verbunden sind. Vorteilhaft sind die geerdeten Segmente an den jeweiligen Außenseiten der Bürstenbrücke positioniert.

Vorzugsweise erfolgt eine Befestigung der Isolationssegmente mit geerdeten Segmenten. Die Befestigung kann durch eine Schraubverbindung erfolgen.

Durch den vorstehend beschriebenen Aufbau kann eine besonders stabile Bürstenbrücke bereitgestellt werden.

Bei einer weiteren vorteilhaften Ausgestaltung der Erfindung weist das Isolationselement eine äußere Isolierschicht auf, wobei die äußere Isolierschicht zur Isolation der Schirmung zu den Segmenten vorgesehen ist, welche die elektrische Leistung bereitstellen.

Das Isolationssegment ist in dieser Ausbildung um einen Bolzen herum aufgebaut. Die innere Isolierschicht ist als Hohlzylinder ausgebildet. Die innere Isolierschicht weist vorzugsweise an seiner äußeren Mantelfläche die Schirmung auf. Zur Isolation der Schirmung gegenüber den Segmenten, insbesondere der Mantelfläche der jeweiligen Öffnung des Segments, dient vorzugsweise die äußere Isolierschicht. Die äußere Isolierschicht bildet demnach die äußere Mantelfläche des Isolationselements.

Vorzugsweise dient ein elektrischer Kontakt zwischen dem geerdeten Segment zum Beaufschlagen der Schirmung mit einem konstanten elektrischen Potential. Durch die Erdung der Schirmung können Ladungen, die in der Schirmung induziert werden, ausgeglichen werden.

Durch den vorstehend beschriebenen Aufbau des Isolationssegments erfolgt eine besonders gute Isolation der Segmente zueinander.

Bei einer weiteren vorteilhaften Ausgestaltung der Erfindung weist das jeweilige Isolationselement einen Bolzen und eine innere Isolierschicht auf, wobei die innere Isolierschicht zur Isolation des Bolzens von der Schirmung vorgesehen ist.

Die innere Isolierschicht sowie die äußere Isolierschicht sind vorzugsweise aus Kunststoff ausgebildet. Der Bolzen ist vorzugsweise aus einem festen Material wie einem Metall ausgebildet.

Durch die Isolation des Bolzens mit der inneren Isolierschicht gegenüber der Schirmung kann der Bolzen aus Metall ausgebildet sein, wobei die elektrische Leitfähigkeit des Metalls nicht zu einer elektrischen Verbindung der Segmente untereinander führt.

Durch den gut isolierten Bolzen kann eine besonders stabile Bürstenbrücke ausgebildet sein.

Bei einer weiteren vorteilhaften Ausgestaltung der Erfindung sind zwischen den Segmenten Abstandshalter positioniert, wobei die Abstandshalter Aufprägungen aufweisen.

Die Abstandshalter sind vorzugsweise als Hohlzylinder ausgeführt. Die Seitenflächen des Abstandshalters liegen jeweils auf dem Segment auf. Die innere Mantelfläche umschließt vorzugsweise zumindest bereichsweise das Isolationselement.

Die äußere Mantelfläche des Abstandshalters ist vorzugsweise mit der Aufprägung beaufschlagt. Die Aufprägung dient vorzugseise zur Unterdrückung eines Kriechstroms. Die Aufprägung ist vorzugsweise um die Mantelfläche herum ausgebildet. Die Aufprägung dient zur Kriechstromunterdrückung.

Der Abstandshalter dient zur verbesserten Isolation der Segmente zueinander. Darüber hinaus dient die Aufprägung zum Schutz einer elektrisch leitfähigen Verbindung durch elektrisch leitfähige Partikel.

Bei einer weiteren vorteilhaften Ausgestaltung der Erfindung ist die Schirmung geerdet.

Die Schirmung ist vorzugsweise mit einem Segment verbunden, welches geerdet ist.

Durch die Erdung der Schirmung können induzierte Ladungsträger auf der Oberfläche der Schirmung vorteilhaft abgeleitet werden.

Bei einer weiteren vorteilhaften Ausgestaltung der Erfindung ist der Bolzen im Wesentlichen auf einem Metall gefertigt.

Durch die Fertigung des Bolzens aus einem Metall ist eine besonders feste und stabile Verbindung der (Isolations-) Segmente der Bürstenbrücke möglich.

Bei einer weiteren vorteilhaften Ausgestaltung der Erfindung ist an dem jeweiligen Segment jeweils zumindest eine Haltevorrichtung für Schleifringbürsten befestigt, wobei die Haltevorrichtung zur elektrischen Verbindung zwischen dem jeweiligen Segment und einer Schleifringbürste vorgesehen ist.

Die Schleifringbürsten sind vorzugsweise elektrisch mit dem jeweils zugeordneten Segment verbunden. Die Haltevorrichtungen sind vorzugsweise über eine Schraubverbindung mit dem jeweils zugeordneten Segment verbunden. Vorzugsweise ist die Haltevorrichtung zumindest teilweise aus einem elektrischen Werkstoff ausgebildet. Vorzugsweise ist die Haltevorrichtung zumindest teilweise aus Aluminium, Bronze, Edelstahl, Kupfer oder aus Messing ausgebildet.

Durch die elektrisch leitfähige Haltevorrichtung kann elektrischer Strom besonders einfach auf die jeweilige Schleifringbürste in der Haltevorrichtung übertragen werden.

Bei einer weiteren vorteilhaften Ausgestaltung der Erfindung ist die Schleifringbrücke zur Übertragung einer elektrischen Leistung von zumindest 100 Kilowatt, insbesondere von zumindest einem Megawatt, vorzugsweise 5 Megawatt, ausgebildet.

Durch die Erfindung ist die Schleifringbrücke zum Einsatz in der Kraftwerktechnik oder für leistungsfähige Industrieanlagen, insbesondere für die Schwerindustrie, geeignet. Darüber hinaus kann die Erfindung vorteilhaft für Schiffsantriebe eingesetzt werden.

Bei einer weiteren vorteilhaften Ausgestaltung der Erfindung weist die Schleifringbürste zumindest vier Segmente auf, wobei drei der Segmente mit jeweils einer Phase einer Dreiphasen-Wechselspannung und ein weiteres Segment mit dem konstanten elektrischen Potential beaufschlagt ist.

Vorteilhaft weise die Bürstenbrücke sechs Segmente auf.

Die jeweilig an der Vorderseite und an der Rückseite positionierten Segmente sind vorzugsweise nicht mit einem sich zeitlich verändernden elektrischen Potential, verbunden.

Die jeweilig an der Vorderseite und Rückseite der Bürstenbrücke positionierten Segmente dienen vorzugsweise zur Stabilisierung der Bürstenbrücke und nicht zur Übertragung von elektrischer Leistung.

Das weitere Segment dient vorzugsweise zur Bereitstellung einer Erdung für den Schleifring.

Die jeweilig an der Vorderseite und der Rückseite der Bürstenbrücke angeordneten Segmente dienen zur Abschirmung der Bürstenbrücke in axiale Richtung. Von den vier, dazwischen angeordneten Segmenten dienen drei der Segmente zur Übertragung einer Dreiphasen-Wechselspannung. Das vierte Segment dient zur Erdung des Schleifrings, d.h. Schleifringbürsten beaufschlagen den Schleifring ohne dass eine elektrische Leistung übertragen wird.

Durch einen Aufbau der Schleifringbürste mit zumindest vier Segmenten sind eine Übertragung einer Dreiphasen-Wechselspannung und eine Erdung des Schleifrings bei einem besonders kompakten Aufbau möglich. Weitere Segmente dienen vorzugsweise zur Abschirmung der Bürstenbrücke.

Die Schleifringeinheit umfasst zumindest einen Schleifring und eine Schleifringbrücke gemäß vorangehender Beschreibung, wobei die Schleifringbrücke zur Halterung von Schleifringbürsten ausgebildet ist, wobei mit Hilfe der Schleifringbürsten eine elektrische Leistung, insbesondere in Form einer Dreiphasen-Wechselspannung, auf den zumindest einem Schleifring übertragbar ist.

Vorzugsweise dienen die Schleifringbürsten, die jeweils einem Segment zugeordnet sind, zur Übertragung der elektrischen Leistung von/auf jeweils eine Kontaktfläche des Schleifrings. Die jeweilige Kontaktfläche des Schleifrings ist an der Mantelfläche des Schleifrings positioniert. Der Schleifring ist vorzugsweise drehbar gelagert. Die elektrische Spannung bzw. der elektrische Strom, die von der jeweiligen Schleifringbürste bereitgestellt/aufgenommen wird, wird von der Kontaktfläche aufgenommen/bereitgestellt. Die jeweilige Kontaktfläche ist vorzugsweise auf der Mantelfläche des Schleifrings positioniert. Der Schleifring ist vorzugsweise einem Rotor zugeordnet.

Eine vorteilhafte Anwendung der Erfindung ist eine elektrische Maschine, insbesondere ein Generator für eine Windkraftanlage mit einer hier beschrieben Bürstenbrücke. Vorzugsweise ist die elektrische Maschine als fremd-erregte elektrische Maschine ausgebildet.

Die elektrische Leistung, welche mit Hilfe der hier beschriebenen Schleifringbürste von einem stationären Element, insbesondere einem Stator, zum Rotor hin- und/oder herübertragen wird, kann mit Hilfe der hier beschriebenen Erfindung besonders sicher übertragen werden.

Eine weitere vorteilhafte Anwendung der Erfindung ist eine Windkraftanlage. Die Windkraftanlage weist vorzugsweise eine hier beschriebene Bürstenbrücke und/oder eine hier beschriebene Schleifringeinheit auf. Durch die hier beschriebene Erfindung kann die Übertragung der elektrischen Leistung mit Hilfe einer besonders kompakt ausgebildeten Bürstenbrücke übertragen werden.

Im Folgenden wird die Erfindung anhand von Figuren näher beschrieben und erläutert. Die in den Figuren gezeigten Ausführungen der Erfindung sind lediglich beispielhaft. Die gezeigten Merkmale können fachmännisch zu neuen Ausführungen der Erfindung zusammengefügt werden.

Es zeigen:
- FIG 1: eine beispielhafte Bürstenbrücke,
- FIG 2: ein Ausschnitt einer beispielhaften Bürstenbrücke,
- FIG 3: ein Schnitt einer Schleifringeinheit sowie
- FIG 4: einen Schnitt durch eine beispielhafte Bürstenbrücke.

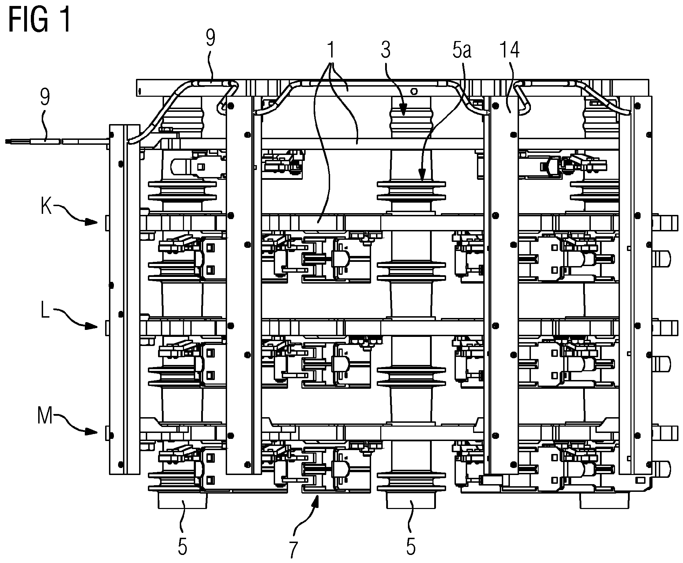

FIG 1 zeigt eine beispielhafte Bürstenbrücke. Die Bürstenbrücke umfasst Segmente 1. Die Segmente 1 sind parallel und beabstandet angeordnet. Die Segmente 1 werden durch Isolationselemente 3 verbunden. Den Segmenten 1 sind jeweils Haltevorrichtungen 7 zugeordnet. Die Haltevorrichtungen 7 dienen zur Aufnahme von Schleifringbürsten 12 (hier der Übersicht halber nicht gezeigt).

Die Isolationselemente 3 umfassen Anstandshalter 5, wobei die Abstandhalter vorteilhaft Zylinderförmig ausgebildet sind. Das jeweilige Segment 1 wird mit einer elektrischen Verbindung mit einer elektrischen Leistung beaufschlagt. Die elektrische Leistung ist mit Hilfe der Schleifringbürsten 12 auf einen Schleifring übertragbar.

Das jeweilige Isolationssegment 3 ist von einzelnen Abstandshaltern 5 umfasst. Die Abstandshalter 5 sind jeweils zwischen den Segmenten 1 positioniert und dienen zu deren Beabstandung.

Für die Zuleitung der elektrischen Leistung zu dem jeweiligen Segment 1 dient eine Kontaktführung 14. Die Kontaktführung 14 ist vorzugsweise in einem Kabelschacht 9 eingebracht. Der Kabelschacht 9 ist vorzugsweise parallel zu den Isolationssegmenten 3 ausgerichtet.

Die Segmente 1 sind durch drei Isolationssegmente 3 verbunden. Die Segmente 1 sind vorzugsweise aus einem Metallblech hergestellt. Die Segmente 1 weisen eine Dicke von ca. 2 bis 8 Millimeter auf. Die Segmente 1 sind im Wesentlichen Ringsegment-artig ausgeführt. Hierbei kann die jeweilige Seite des Segments 1 einen Winkel zwischen 150 Grad und 220 Grad ausbilden.

Drei der Segmente 1 dienen zur Übertragung von jeweils einer Phase einer Dreiphasen-Wechselspannung. Ein viertes Segment 1 dient vorzugsweise zur Bereitstellung eines konstanten elektrischen Potentials (Erde) für einen Schleifring 11.

Der jeweilige Kabelschacht 9 dient zur Führung der Kontaktführung 15. Als Kontaktführung 15 ist hier die Zuleitung der elektrischen Kontakte verstanden.

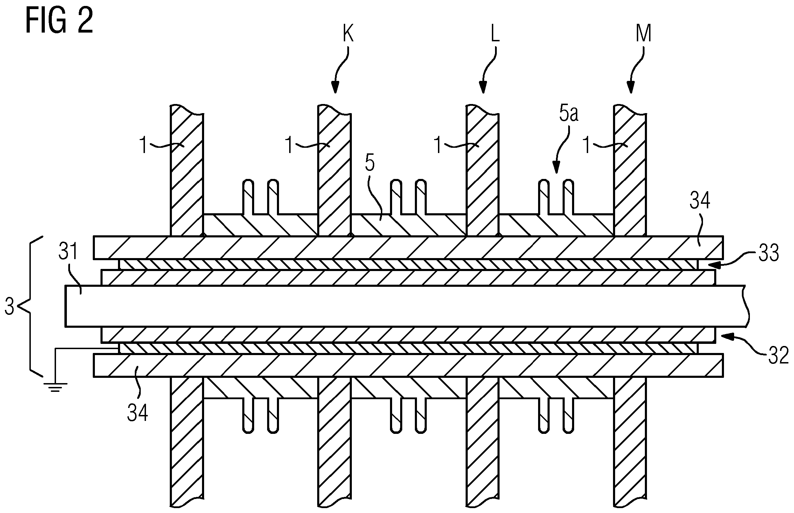

FIG 2 zeigt einen Ausschnitt einer beispielhaften Bürstenbrücke. Das Isolationselement 3 umfasst einen Bolzen 31. Der Bolzen 31 ist vorzugsweise aus einem Metall mit einer hohen Festigkeit und geringem Gewicht, beispielhaft Aluminium oder Edelstahl, ausgeführt. Der Bolzen 31 ist von einer inneren Isolierschicht 32 umfasst. Die innere Isolierschicht 32 ist vorzugsweise als Kunststoffrohr ausgebildet. Die innere Iso-lierschicht 32 dient als Grundlage für die Schirmung 33. Die Schirmung 33 ist vorzugsweise als Metallfolie, insbesondere als Aluminiumfolie oder als Kupferfolie, ausgebildet. Die Schirmung 33 bedeckt zumindest bereichsweise die äußere Mantelfläche der inneren Isolierschicht 32. Die Schirmung 33 ist von einer äußeren Isolierschicht 34 umgeben.

Die äußere Isolierschicht 34 ist vorzugsweise als Kunststoffrohr ausgebildet. Die äußere Isolierschicht 34 führt durch die jeweilige Öffnung der Segmente 1. Die Segmente 1 sind vorzugsweise als Metallplatten ausgeführt. Zur Beabstandung der Segmente 1 zueinander sind Abstandshalter 5 um die äußere Isolierschicht 34 herum positioniert. Die Abstandshalter 5 weisen jeweils Aufprägungen 5a auf. Die Aufprägungen 5a dienen zur Verminderung von Kriechströmen. Durch die Abstandshalter 5 sind die Segmente 1 zueinander verbessert isoliert.

Die Schirmung 33 ist hier mit einem konstanten elektrischen Potential verbunden. Vorzugsweise ist die Schirmung 33 geerdet. Die Erdung erfolgt vorzugsweise durch einen elektrischen Kontakt 34a der Schirmung 33 mit einem geerdeten Segment 1.

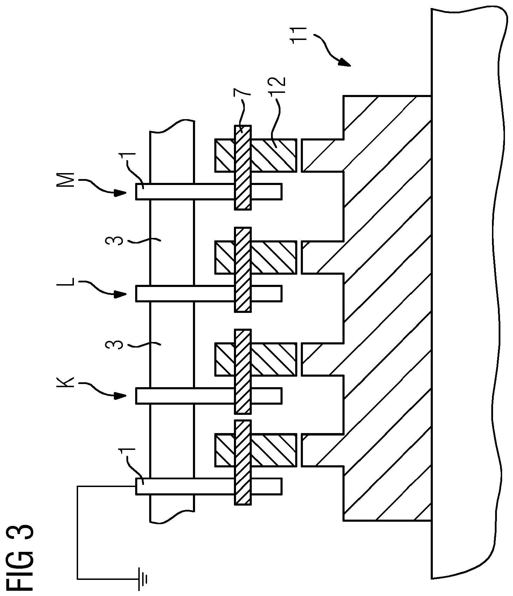

FIG 3 zeigt einen Schnitt einer Schleifringeinheit. Die Schleifringeinheit umfasst einen Schleifring 11 und die Bürstenbrücke. Die Bürstenbrücke weist vier Segmente 1 auf, wobei drei der Segmente 1 zur Bereitstellung einer Dreiphasen-Wechselspannung ausgebildet sind. Das jeweilige Segment dient hierbei zur Bereitstellung einer Phase K, L, M. Ein viertes (geerdetes) Segment 1 ist mit dem Erdpotential verbunden. Das jeweilige Segment 1 ist mit Hilfe einer Haltevorrichtung 7 mit einer Schleifringbürste 12 elektrisch verbunden. Die Schleifringbürste 12 stellt die jeweilige Phase K, L, M der Dreiphasen-Wechselspannung an den Schleifring 11 bereit. Ein weiteres Segment 1 stellt über eine Schleifringbürste 12 das konstante elektrische Potential (Erdpotential) für den Schleifring 11 bereit. Der Schleifring 11 ist drehbar gelagert und nimmt die Dreiphasen-Wechselspannung sowie das Erdpotential auf.

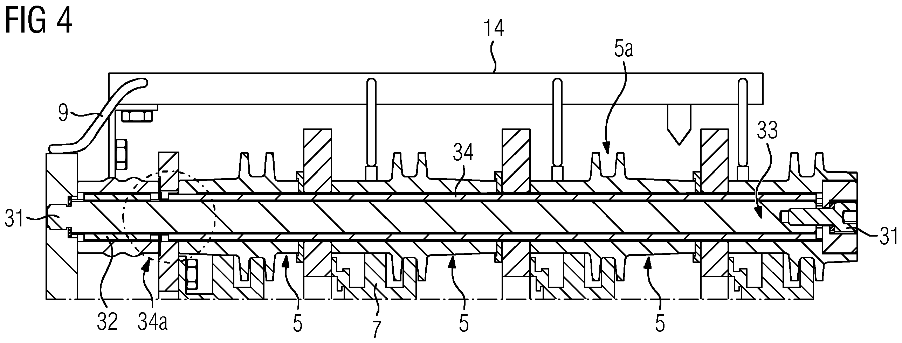

FIG 4 zeigt einen Schnitt durch eine beispielhafte Bürstenbrücke. Die Bürstenbrücke umfasst vier Segmente 1, wobei die Segmente zur Bereitstellung der Dreiphasen-Wechselspannung und des konstanten elektrischen Potentials ausgebildet ist.

Das jeweilige Segment 1 ist aus einem elektrisch leitenden Material, beispielsweise Edelstahl, Bronze, Kupfer oder Aluminium, gefertigt.

Das jeweilige Segment 1 umfasst Öffnungen zur Durchführung der Isolationssegmente 3. Die Öffnungen der Segmente 1 weisen einen Durchmesser auf, der so groß ausgebildet ist, dass eine äußere Isolierschicht 34 durchgeführt werden kann.

An dem jeweiligen Segment 1 sind jeweils Haltevorrichtungen 7 befestigt. Die Haltevorrichtung 7 dient jeweils zur Aufnahme von Schleifringbürsten 12. Das jeweilige Segment 1 ist mit einer Kontaktführung 14, hier in einem Kabelschacht 9 positioniert, verbunden. Die Kontaktführung 14 dient zur Bereitstellung der jeweiligen Phase K, L, M der Dreiphasen-Wechselspannung und somit zur Bereitstellung der elektrischen Leistung.

Die Segmente 1 sind durch ein Isolationselement 3 zueinander beabstandet verbunden. Das Isolationselement 3 umfasst in seiner Mitte einen Bolzen 31. Der Bolzen 31 weist an einem Ende ein Gewinde auf, so dass der Bolzen 31 mit einem (nicht stromführenden) Segment 1 befestigt werden kann. Das Segment 1, welches mit dem Bolzen 31 durch die Schraubverbindung verbunden ist, dient nicht zur Bereitstellung einer elektrischen Leistung sondern insbesondere zu einer verbesserten Stabilität der Bürstenbrücke. Um die Mantelfläche des Bolzens 31 ist eine innere Isolierschicht 32 angeordnet. Die innere Isolierschicht 32 dient zur Isolation des Bolzens 31 in Bezug zu den Segmenten 1, welche zur Bereitstellung der elektrischen Leistung vorgesehen sind.

Die innere Isolierschicht 32 ist als Träger für die Schirmung 33 ausgebildet. Die Schirmung 33 ist vorzugsweise als Metallschicht zwischen der inneren Isolierschicht 32 und der äußeren Isolierschicht 34 angeordnet.

Die äußere Isolierschicht 34 ist zwischen der Öffnung des jeweiligen Segments 1 und der Schirmung 33 positioniert. Die äußere Isolierschicht 34 dient zur Isolation der Schirmung 33 von dem jeweiligen Segment 1.

Um die äußere Isolierschicht 34 und jeweils zwischen den Segmenten 1 sind vorzugsweise Abstandshalter 5 positioniert. Die Abstandshalter 5 dienen zur verbesserten Isolation der Segmente 1 untereinander. Die Abstandshalter 5 dienen überdies zur verbesserten Stabilität des Segmente 1 in der Bürstenbrücke. Die Segmente 1 beaufschlagen hierbei Seitenflächen des jeweiligen Abstandshalters 5.

Die Schirmung ist durch einen elektrischen Kontakt 34a mit dem geerdeten Segment 1 elektrisch verbunden. Das geerdete Segment 1 weist ein konstantes elektrisches Potential auf. Vorzugsweise ist im Bereich des elektrischen Kontaktes 34a die äußere Isolierschicht 34 zumindest bereichsweise unterbrochen.

Die Unterbrechung der äußeren Isolierschicht 34 dient zur Durchführung eins elektrischen Kontaktes zwischen dem Segment 1 und der Schirmung 33.

Zusammenfassend betrifft die Erfindung eine Bürstenbrücke und eine Schleifringeinheit sowie eine elektrische Maschine und eine Windkraftanlage mit jeweils einer solchen Bürstenbrücke. Die Bürstenbrücke umfasst Segmente 1, die vorzugsweise als Ringsegment-artig geformte Metallplatten ausgebildet sind. Die Segmente dienen zur Bereitstellung und zur Befestigung von Schleifringbürsten 12, die jeweils in Haltevorrichtungen 7 positioniert sind. Die Segmente 1 sind durch Isolationssegmente 3 in paralleler Art und Weise miteinander verbunden. Die Isoliersegmente 3 weisen in ihrem Inneren eine Schirmung 33 auf, wobei die Schirmung 33 in Bezug zu den Segmenten 1 isoliert ist. Die Schirmung 33 ist mit einem konstanten elektrischen Potential verbunden. Mit Hilfe der Schirmung 33 kann die Isolation der Segmente 33 untereinander gegen unkontrollierten Ladungsaustausch verbessert werden. Zur weiteren Verbesserung der Isolation sind Abstandshalter 5 zwischen den Segmenten 1 positioniert, wobei die Abstandshalter 5 vorzugsweise um die Isoliersegmente 3 herum angeordnet sind und vorzugsweise Aufprägungen 5a zur Kriechwegverlängerung aufweisen.

## Patentansprüche

1. Schleifringbrücke, insbesondere zum Einsatz in einer Windkraftanlage, aufweisend zumindest zwei Segmente (1) und zumindest ein Isolationselement (3), wobei zumindest ein Teil der Segmente (1) zur Bereitstellung einer elektrischen Leistung, insbesondere mit Hilfe von Schleifringbürsten (12) ausgebildet ist, wobei das Isolationselement (3) zur Isolation der Segmente (1) und zur Beabstandung der Segmente ausgebildet ist, **dadurch gekennzeichnet, dass** das jeweilige Isolationselement (3) eine Schirmung (33) umfasst, und dass die Schirmung (33) im Inneren des jeweiligen Isolationselements (3) angeordnet ist, und dass die Schirmung mit einem konstanten elektrischen Potential verbunden ist.

2. Schleifringbrücke nach Anspruch 1, wobei das jeweilige Isolationselement (3) mit dem jeweiligen Segment (1) verbunden ist, wobei das jeweilige Isolationselement (3) durch Öffnungen zumindest derjenigen Segmente (1) geführt ist, welche mit einem elektrischen Potential beaufschlagt sind.

3. Schleifringbrücke nach Anspruch 1 oder 2, wobei das Isolationselement (3) eine äußere Isolierschicht (34) aufweist, wobei die äußere Isolierschicht (34) zur Isolation der Schirmung (33) zu den Segmenten (1) vorgesehen ist, welche die elektrische Leistung bereitstellen.

4. Schleifringbrücke nach einem der vorangehenden Ansprüche, wobei das jeweilige Isolationselement (3) einen Bolzen (31) und eine innere Isolierschicht (32) aufweist, wobei die innere Isolierschicht (32) zur Isolation des Bolzens (31) von der Schirmung (33) vorgesehen ist.

5. Schleifringbrücke nach einem der vorangehenden Ansprüche, wobei zwischen den Segmenten (1) Abstandshalter (5) positioniert sind und die Abstandshalter (5) Aufprägungen (5a) aufweisen.

6. Schleifringbrücke nach einem der vorangehenden Ansprüche, wobei die Schirmung (33) geerdet ist.

7. Schleifringbrücke nach einem der vorangehenden Ansprüche, wobei der Bolzen (31) im Wesentlichen aus einem Metall gefertigt ist.

8. Schleifringbrücke nach einem der vorangehenden Ansprüche, wobei an dem jeweiligen Segment (1) jeweils zumindest eine Haltevorrichtung (7) für Schleifringbürsten (8) befestigt ist, wobei die Haltevorrichtung (7) zur elektrischen Verbindung zwischen dem jeweiligen Segment (1) und einer Schleifringbürste (12) vorgesehen ist.

9. Schleifringbrücke nach einem der vorangehenden Ansprüche, wobei die Schleifringbrücke zur Übertragung einer elektrischen Leistung von zumindest 100 Kilowatt, insbesondere von zumindest einem Megawatt, vorzugsweise 5 Megawatt, ausgebildet ist.

10. Schleifringbrücke nach einem der vorangehenden Ansprüche, aufweisend zumindest vier Segmente, wobei drei der Segmente (1) mit jeweils einer Phase (K, L, M) einer Dreiphasen-Wechselspannung und ein weiteres Segment mit dem konstanten elektrischen Potential beaufschlagt ist.

11. Schleifringeinheit, umfassend zumindest einen Schleifring (21) und eine Schleifringbrücke nach einem der vorangehenden Ansprüche, wobei die Schleifringbrücke zur Halterung von Schleifringbürsten (12) ausgebildet ist, wobei mit Hilfe der Schleifringbürsten (12) eine elektrische Leistung, insbesondere in Form einer Dreiphasen-Wechselspannung, auf den zumindest einen Schleifring (21) übertragbar ist.

12. Elektrische Maschine, insbesondere ein Generator für eine Windkraftanlage, aufweisend eine Schleifringbrücke nach einem der Ansprüche 1 bis 10.

13. Windkraftanlage, aufweisend eine Schleifringbrücke nach einem der Ansprüche 1 bis 10, eine Schleifringeinheit nach Anspruch 11 oder eine elektrische Maschine nach Anspruch 12.

## Claims

1. Slip ring bridge, in particular for use in a wind power installation, having at least two segments (1) and at least one insulation element (3), wherein at least some of the segments (1) are designed for providing electrical power, in particular with the aid of slip ring brushes (12), wherein the insulation element (3) is designed for insulating the segments (1) and for spacing apart the segments, **characterized in that** the respective insulation element (3) comprises a shield (33), and **in that** the shield (33) is arranged in the interior of the respective insulation element (3), and **in that** the shield is connected to a constant electric potential.

2. Slip ring bridge according to Claim 1, wherein the respective insulation element (3) is connected to the respective segment (1), wherein the respective insulation element (3) is guided through openings at least of those segments (1) to which an electric potential is applied.

3. Slip ring bridge according to Claim 1 or 2, wherein the insulation element (3) has an outer insulating layer (34), wherein the outer insulating layer (34) is provided for insulating the shield (33) from the segments (1) which provide the electrical power.

4. Slip ring bridge according to one of the preceding claims, wherein the respective insulation element (3) has a pin (31) and an inner insulating layer (32), wherein the inner insulating layer (32) is provided for insulating the pin (31) from the shield (33).

5. Slip ring bridge according to one of the preceding claims, wherein spacers (5) are positioned between the segments (1) and the spacers (5) have embossed portions (5a).

6. Slip ring bridge according to one of the preceding claims, wherein the shield (33) is connected to ground.

7. Slip ring bridge according to one of the preceding claims, wherein the pin (31) is manufactured substantially from a metal.

8. Slip ring bridge according to one of the preceding claims, wherein in each case at least one holding apparatus (7) for slip ring brushes (8) is fastened to the respective segment (1), wherein the holding apparatus (7) is provided for electrical connection between the respective segment (1) and a slip ring brush (12).

9. Slip ring bridge according to one of the preceding claims, wherein the slip ring bridge is designed for transmitting an electrical power of at least 100 kilowatts, in particular of at least one megawatt, preferably 5 megawatts.

10. Slip ring bridge according to one of the preceding claims, having at least four segments, wherein in each case one phase (K, L, M) of a three-phase AC voltage is applied to three of the segments (1) and the constant electric potential is applied to a further segment.

11. Slip ring unit, comprising at least one slip ring (21) and one slip ring bridge according to one of the preceding claims, wherein the slip ring bridge is designed to hold slip ring brushes (12), wherein an electrical power, in particular in the form of a three-phase AC voltage, can be transmitted to the at least one slip ring (21) with the aid of the slip ring brushes (12) .

12. Electrical machine, in particular a generator for a wind power installation, having a slip ring bridge according to one of Claims 1 to 10.

13. Wind power installation having a slip ring bridge according to one of Claims 1 to 10, a slip ring unit according to Claim 11 or an electrical machine according to Claim 12.

## Revendications

1. Passerelle de bague collectrice, à utiliser notamment dans une éolienne, comportant au moins deux segments (1) et au moins un élément (3) isolant, au moins une partie des segments (1) étant constituée pour donner une puissance électrique, notamment à l'aide de balais (12) de bague collectrice, l'élément (3) isolant étant constitué pour l'isolation des segments (1) et pour la mise à distance des segments, **caractérisée en ce que** l'élément (3) isolant respectif comprend un blindage (33) et **en ce que** le blindage (33) est disposé à l'intérieur de l'élément (3) isolant respectif et **en ce que** le blindage est relié à un potentiel électrique constant.

2. Passerelle de bague collectrice suivant la revendication 1, dans laquelle l'élément (3) isolant respectif est relié au segment (1) respectif, l'élément (3) isolant respectif passant dans des ouvertures d'au moins les segments (1) auxquelles est appliqué un potentiel électrique.

3. Passerelle de bague collectrice suivant la revendication 1 ou 2, dans laquelle l'élément (3) isolant a une couche (34) isolante extérieure, la couche (34) isolante extérieure étant prévue pour isoler le blindage (33) par rapport aux segments (1), qui donnent la puissance électrique.

4. Passerelle de bague collectrice suivant l'une des revendications précédentes, **caractérisée en ce que** l'élément (3) isolant respectif a un axe (31) et une couche (32) isolante intérieure, la couche (32) isolante intérieure étant prévue pour isoler l'axe (31) du blindage (33).

5. Passerelle de bague collectrice suivant l'une des revendications précédentes, dans laquelle des entretoises (5) sont placées entre les segments (1) et les entretoises (5) ont des empreintes (5a).

6. Passerelle de bague collectrice suivant l'une des revendications précédentes, dans laquelle le blindage (33) est mis à la terre.

7. Passerelle de bague collectrice suivant l'une des revendications précédentes, dans laquelle l'axe (31) est essentiellement en un métal.

8. Passerelle de bague collectrice suivant l'une des revendications précédentes, dans laquelle, au segment (1) respectif est fixé respectivement au moins un système (7) de maintien de balais (8) de bague collectrice, le système (7) de maintien étant prévu pour la liaison électrique entre le segment (1) respectif et un balais (12) de bague collectrice.

9. Passerelle de bague collectrice suivant l'une des revendications précédentes, dans laquelle la passerelle de bague collectrice est constituée pour le transport d'une puissance électrique d'au moins 100 kilowatt, notamment d'au moins un mégawatt, de préférence de 5 mégawatt.

10. Passerelle de bague collectrice suivant l'une des revendications précédentes, comportant au moins quatre segments, respectivement une phase (K, L, M) d'une tension alternative à trois phases étant appliquée à trois des segments et un potentiel électrique constant étant appliqué à un autre segment.

11. Unité à bague collectrice, comprenant au moins une bague (21) collectrice et une passerelle de bague collectrice suivant l'une des revendications précédentes, dans laquelle la passerelle de bague collectrice est constituée pour maintenir des balais (12) de bague collectrice, dans laquelle, à l'aide des balais (12) de bague collectrice, une puissance électrique, notamment sous la forme d'une tension alternative triphasée, peut être transmise à la au moins une bague (21) collectrice.

12. Machine électrique, notamment générateur d'une éolienne, comportant une passerelle de bague collectrice suivant l'une des revendications 1 à 10.

13. Eolienne, comportant une passerelle de bague collectrice suivant l'une des revendications 1 à 10, une unité à bague collectrice suivant la revendication 11 ou une machine électrique suivant la revendication 12.
